# EUROPEAN PATENT SPECIFICATION

(11) **EP 2 715 208 B1**
(45) Date of publication and mention of the grant of the patent: **20.07.2016**
(21) Application number: 12792232.6
(22) Date of filing: 31.05.2012
(51) Int. Cl.: F17C 11/00, B67D 7/04, F02C 3/20, F23G 7/06, F25J 3/06

(54) **METHOD AND SYSTEM FOR TREATING CARGO VAPORS FROM CRUDE OIL AND PETROLEUM PRODUCTS TANKS TO PRODUCE ELECTRICITY**
VERFAHREN UND SYSTEM ZUR VERARBEITUNG VON LADUNGSDÄMPFEN AUS ROHÖL- UND ERDÖLPRODUKTTANKS ZUR ERZEUGUNG VON ELEKTRIZITÄT
PROCÉDÉ ET SYSTÈME POUR TRAITER DES VAPEURS PROVENANT DE CITERNES DE PÉTROLE BRUT ET DE PRODUITS PÉTROLIERS AFIN DE PRODUIRE DE L'ÉLECTRICITÉ

(30) Priority: 31.05.2011 NO 20110791; 19.09.2011 NO 20111266
(43) Date of publication of application: 09.04.2014
(73) Proprietor: Wärtsilä Oil & Gas Systems AS, 1371 Asker (NO)
(72) Inventor: BRØDRESKIFT, Knut, N-3408 Tranby (NO)
(74) Representative: Furan, Tone
(86) International application number: PCT/NO2012/000043
(87) International publication number: WO 2012/165968

(56) References cited:
- EP-A1- 1 788 222
- EP-A1- 1 788 222
- WO-A1-98/33026
- WO-A1-98/33026
- WO-A1-03/011420
- WO-A1-2004/011789
- GB-A- 2 289 054
- JP-A- 2004 092 426
- JP-A- 2006 118 498
- JP-A- 2008 185 247
- NO-B- 312 118
- US-A- 5 832 713

## Description

### Technical Field

The invention relates to a method and system for treating cargo vapors from crude oil and petroleum products tanks to produce electrical power

### Background Art

In tanks for storing crude oil products, cargo vapors are emitted from the crude oil, which is an environmental problem.

To counteract that issue, nearly all crude oil and petroleum products tankers are equipped with vapor return pipes for feeding the cargo vapors to a common manifold and from there back to shore oil terminals. At these oil terminals some technologies are available for treating the cargo vapors. Methods are mainly based on re absorption of Hydro Carbons (HC) in the cargo. The efficiency of these systems is only in the range of 70-90% non-methane volatile organic compounds (NMVOC) recovery, and no methane is recovered.

A known system works based on membrane gas separation and re-absorption of cargo vapors to crude oil. In another known system cargo vapors are absorbed with a Cold Liquid Absorber Process. In yet another system, an adsorption process uses active coal and pressure swing regeneration. However, these systems have some drawbacks. One disadvantage is that they require external power to operate. Also, the regeneration may be questionable, because the hydrocarbon (HC), which is reabsorbed into crude oil being loaded to a vessel, may flash off at a later stage. Thus, the efficiency of these systems is only in the range of 70-90% non-methane volatile organic compounds (NMVOC) recovery, and no methane is recovered.

Further, incineration facilities are known, which returns the cargo vapors to enclosed furnaces. The furnaces are supplied with propane pilot fuel to safely combust the hydrocarbon (HC). However, such an incineration is costly as it requires pilot fuel, i.e. fuel is added to combust fuel, and it might increase carbon dioxide (CO₂) emissions.

JP 2008 185247 A discloses a method for treating cargo vapours from crude oil and petroleum to generate electrical power by separating the cargo vapours into liquid volatile organic compounds (LVOC) and compressed surplus gas. The compressed surplus gas and the LVOC are fed to a combustion chamber.

US 5 832 713 A relates to a method and apparatus for the destruction of volatile organic compounds through the use of a turbine engine in order to produce power.

WO 98/33026 A1 describes a method of reducing the discharge of volatile organic compounds into the athmosphere from a tanker including mainly organic liquids during handling of hydrocarbons.

EP 1788222 A1 discloses a method of treating a volatile organic compound with gas turbine and system for treating volatile organic compound.

Hamworthy Oil & Gas Systems AS has developed and delivered several high capacity volatile organic compounds (VOC) recovery systems which are installed onboard oil tankers. This system is described in patent application WO 2003/011420 A1. This current process recovers volatile organic compounds (VOC) by condensation. These liquefied volatile organic compounds (LVOC) are used as fuel to operate a steam boiler, in addition to the surplus gases from the VOC recovery plant. Steam turbines are used for producing power. However, the system is rather large in size and not so cost efficient. As electricity is a more practical energy carrier than steam it is desired to develop a system for electrical power production directly combusting LVOC and Surplus gas that is smaller, less costly and more efficient.

### Summary of the invention

It is therefore an object of the invention to provide a method and system for treating cargo vapors from crude oil tanks, which address at least one of the above mentioned problems.

This object is solved with a method and system for treating cargo vapors from crude oil tanks according to the independent claims 1 and 9. Further advantageous developments are outlined in the dependent claims.

The invention is based on a known art of separating the cargo vapors into liquid volatile organic compounds (LVOC) and surplus gas in a condensation type VOC recovery plant; A gas turbine will then be used for electricity production. Normally a gas turbine has a quite low efficiency compared with combustion engines. The reason for this is the air requirement, and the compression work required to handling air to combustion chamber. The high air supply is required due to the mass flow needed in the turbine, and hence the turbine does not use all 02 in the air supply.

One of the ideas behind this invention is to reduce the gas compressors workload substituting the air supply with surplus gas from the VOC recovery plant.

Supplying surplus gas directly to the combustion chamber under pressurized conditions, reduce the compressor workload and will then increase the compressor efficiency.

In addition the use of remaining HC in the surplus gas as fuel will solve an environmental problem.

With such a method, the gas compression work applied in the VOC recovery plant can be recovered by substituting a main part of the air flow which would usually be required in the gas turbine, with surplus gas. This improves the overall efficiency of the system as the gas turbine efficiency increase by 20-40%

Thus, the method achieves a collaborate interwork between the work of the VOC recovery plant on compressing gas for condensing, coupled with the need of the gas turbine for compressed gas under the combustion process which leads to improved efficiency. In accordance with one aspect of the invention there is provided a method for treating cargo vapors from crude oil tanks, comprising the steps of separating the cargo vapors into liquid volatile organic compounds (LVOC) and surplus gas in a condensation type VOC recovery plant; A gas turbine having a compressor, a combustion chamber and an expander; feeding the surplus gas to the combustion chamber; feeding the liquid volatile organic compounds (LVOC) to the combustion chamber; feeding air to the compressor operated by the expander, and feeding the compressed air to the combustion chamber, and combusting the air, surplus gas and the liquid volatile organic compounds (LVOC) in the combustion chamber; and operating a generator with the gas turbine to generate electrical power. This method provides a dual fuel arrangement in which in a compact size which eliminates hydrocarbon. With such a method, some of the energy applied to the cargo vapors during processing the gas in the VOC recovery plant can be recovered by substituting a main part of the air flow, which would usually be required in the gas turbine to pass through, with surplus gas. This improves the overall efficiency of the system. Thus, the method achieves a collaborate interwork between the work of the VOC recovery plant on compressing gas for condensing, coupled with the need of the gas turbine for compressed gas under the combustion process which leads to improved efficiency.

According to another embodiment, the method is conducted such that in the step of feeding the surplus gas to the combustion chamber, compressed surplus gas from the VOC recovery plant is transported to the combustion chamber. This provides the advantage that the pressure energy of the surplus gas and the liquefied VOC can be utilized.

According to yet another embodiment of the invention, the method further comprises the step of storing the liquefied volatile organic compounds (LVOC) in a VOC fuel tank at a pressure of 6 to 8 barg. Filling of the oil tank may be intermittent, however it is preferably to operate the gas turbine continuously. Liquefied VOC will be accumulated during loading, and used when no loading takes place. As this fuel is stored at a pressure level similar to the operation pressure level of the gas turbine, the fuel can be fed directly to the gas turbine without further compression.

Further, in another embodiment of the invention, the method further comprises the step of controlling the supply of air, surplus gas and/or liquid volatile organic compounds (VOC) fed to the gas turbine dependent on the wobbe index of the surplus gas. This ensures that the gas turbine is supplied with the correct combustion mixture and operated at the correct duty point.

According to a further embodiment of the invention, the method is further comprising the step of bypassing part of the compressed air around the combustion chamber to influence the expander inlet temperature. This bypass air serves for controlling the temperature at the inlet of the expander at an acceptable level, i.e. it cools the expander. In yet another embodiment of the invention, the surplus gas comprises a low level of oxygen (O₂) content. This is not enough for stoichiometric combustion, therefore additional air is supplied via the compressor which is operated by the expander. However, by replacing some of the air, which would be required by a standard gas turbine, with surplus gas (which has to be eliminated anyway) being already at a suitable pressure level, the workload of the compressor can be reduced and the overall gas turbine efficiency can be increased by 20 to 40%.

According to an embodiment of the invention, the surplus gas further comprises a high level of nitrogen (N₂) content, a low level of carbon dioxide (CO₂) content and a low level of hydrocarbon (HC) content.

According to a further embodiment of the invention, the method further comprises the step of controlling the supply of air and surplus gas fed to the gas turbine dependent on the oxygen content in the gas mixture entering the combustion chamber. This provides for operating the gas turbine at a suitable operation point.

The invention also provides a system for treating cargo vapors from crude oil tanks, which provides basically the same advantages as mentioned above in connection with the method. This system comprises a VOC recovery plant for separating the cargo vapors into liquid volatile organic compounds (VOC) and surplus gas in a VOC recovery plant; a gas turbine having a compressor, a combustion chamber and an expander; a surplus gas line for feeding the surplus gas to the combustion chamber; a supply line for feeding the volatile organic compounds (VOC) to the combustion chamber, and an air supply line for feeding air to the compressor and from there to the combustion chamber. The supply line preferably includes a liquefied VOC line, a VOC fuel tank and a pilot fuel line.

These and other aspects of the invention will be apparent from and elucidated with reference to the preferred embodiments described herein after.

### Short description of the Figures

Fig. 1 is a schematic overview of the system for treating cargo vapors from crude oil tanks according to an embodiment of the invention, and
Fig. 2 is a more detailed schematic view of the control of the system.

### Detailed description of preferred embodiments

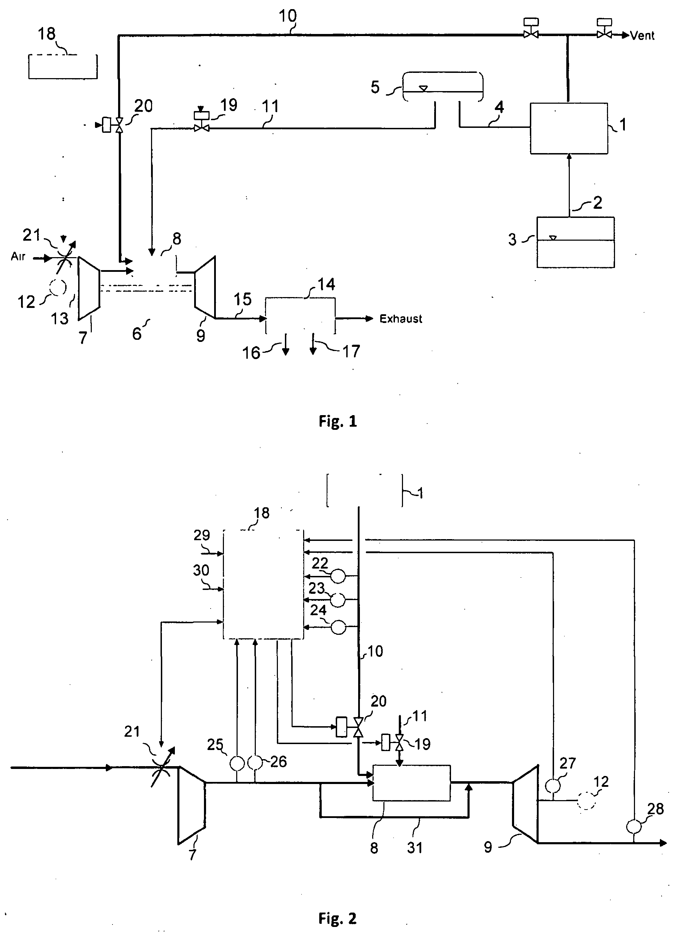

Fig. 1 is a schematic overview of the system for treating cargo vapors from crude oil tanks according to an embodiment of the invention, and Fig. 2 is a more detailed schematic view of the control of the system. In this system, a VOC recovery plant 1 is provided which separates cargo vapors emitted from displaced oil in a cargo tank 2, preferably the cargo tank of an oil tanker 3 or a tank of a shore terminal, into liquid volatile organic compounds (LVOC) and surplus gas. The separation into liquid VOC and surplus gas is preferably conducted by condensation, but also other known separation techniques could be used, such as the ones mentioned in the introductory part of the specification. The liquefied VOC is guided through a Liquefied VOC line 4 into a VOC fuel tank 5. Further, the system comprises a gas turbine 6 having a compressor 7 (turbo compressor), a combustion chamber 8 and an expander 9. The gas turbine 6 can preferably of a radial type. The expander 9 is mechanically -connected with the compressor 7. The pressure ratio of the expander 9 when operating is rather low, e.g. between
6.5 : 1 and 7 : 1. The combustion chamber 8 is supplied with the surplus gas via a surplus gas line 10, and with a small amount of liquefied VOC extracted from the VOC fuel tank 5 via a pilot fuel line 11. Additionally, air is supplied to the combustion chamber, in order to compensate for the surplus gas being low on oxygen (O₂).

The idea is to use surplus gas in combination with the LVOC as fuel for the gas turbine 6. Both can be fed directly from the VOC recovery plant 1. The surplus gas is supplied directly from the VOC recovery plant 1 under pressure, e.g. by a displacement screw compressor, and fed into the combustion chamber 8 without further compression. The LVOC is used as pilot fuel assuring stable combustion, as the surplus gas, is normally unable to keep up its own combustion. The energy resulting from the combustion in the combustion chamber 8 operates the expander 9 which operates the compressor 7 via a shaft 13. Further, the energy gain from the gas turbine 6 is used to drive a generator 12, which is mechanically connected with the shaft 13, for generating electrical energy. The exhaust gas from the gas turbine 6 is fed to a heat recovery device 14 via the exhaust pipe energy applied to the surplus gas in the VOC recovery plant 1 is recovered by expanding this gas thorough the gas turbine, and substituting a main part of the air flow to gas turbine. In the following, the compositions of the fluids in this system are described in more detail. Cargo vapors are emitted from crude oil when oil is loaded into storage tanks. The cargo vapors contain a mix of fractions from methane to the heavier pentanes and heptanes.

The liquefied VOC contains a mixture of hydrocarbon fractions from propane to the heavier heptanes, and do vary slightly over time. The calorific value of the liquefied VOC is maintained more or less constant. The liquefied VOC is stored in the VOC fuel tank 5 in liquid form under a pressure of approximately 6 to 8 barg, preferably 7.5 to 8 barg ("barg" is the unit of the gauge pressure, i.e. the absolute pressure minus the atmospheric pressure). As filling of tank 2 may be intermittent and it is preferably to operate the gas turbine 6 continuously, liquefying the cargo vapor during loading will accumulate fuel for use when no filling takes place.

When evaporating the cargo vapors, remaining light fractions of hydrocarbons (HC) as methane and ethane are not liquefied and emitted from the VOC recovery plant 1 mixed with nitrogen (N₂), carbon dioxide (CO₂) and oxygen (O₂) as surplus gas. The wobbe index for this surplus gas will vary slightly during filling of the tank 2. The surplus gas is basically only present when the VOC recovery plant 1 is in operation which in turn is only the case when the tank 2 is being filled. The surplus gas generally contains hydro carbons mixed with O₂, N₂, CO₂, SO₂ +H2S in different compositions. An exemplary composition of the surplus gas could consist of 10 vol% of carbon dioxide (CO₂), 10 vol% of water (H₂O), 65 vol% of nitrogen (N₂), 5 vol% of oxygen (O₂) and 10 vol% of hydrocarbons (HC).

In order to control the supply of the gas turbine 6 and the combustion in its combustion chamber 8, a control unit 18 is provided. This control unit 18 is controllably connected with a pilot fuel valve 19 for controlling the volume flow and thus the pressure of the liquefied VOC supplied from the VOC fuel tank 5 to the combustion chamber 8. Further, the control unit 18 is controllably connected with a surplus gas valve 20 for controlling the volume flow and thus the pressure of the surplus gas fed from the VOC recovery plant to the combustion chamber 8. In order to control the volume flow of air supplied to the compressor 7, the gas turbine 6 is provided upstream the compressor 7 with inlet gate vanes 21 which are connected with the control unit 18 in order to conduct both, controlling the inlet guide vanes 21 and sensing the volume flow of air passing through them. With respect to sensors, there are provided a wobbe index sensor 22, a temperature sensor 23 and a pressure sensor 24 in the surplus gas line 10 for transmitting the measured values to the control unit 18. The compressed air leaving the compressor 7 is sensed by a temperature sensor 25 and a pressure sensor 26, and the signals are transmitted to the control unit 18, too. For acquiring the revolution speed of the expander 9, there is a revolution sensor 27 connected with the control unit 18. An exhaust temperature sensor 28 senses the exhaust temperature of the gas turbine 6 and sends the signals to the control unit 18. Reference numeral 29 indicates an input of the load set point or load target value of the gas turbine 6, and reference numeral 30 indicates an input of the oxygen set point or the oxygen target value of the oxygen content in the gas mixture entering the combustion chamber 8.

In order to control the inlet temperature of the expander 9, the gas turbine 6 is equipped with a bypass 31 for bypassing compressed air around the combustion chamber 8 for dilution with the combustion exhaust gas in order to control or stabilize the expander inlet temperature at preferably 1000°C.

As the surplus gas has low levels of oxygen (O₂), e.g. 0 to 10 vol%, and primarily contains nitrogen (N₂) and carbon dioxide (CO₂), additional air need to be supplied to the combustion chamber 8 via the compressor 7 to make combustion efficient. The combustion need to combust the remaining hydrocarbon (HC) in the surplus gas. A challenge in achieving this is to adjust the composition of gas in the combustion chamber 8. This composition has to be adjusted depending on the hydrocarbon (HC) content in surplus gas. This content can be determined from the wobbe index which varies in the range from 5 to 60 MJ/Nm³. Therefore, the control unit 18 monitors the wobbe index of the surplus gas and adjusts the settings of the control devices (valves, vanes) mentioned above accordingly. The surplus gas has to be mixed with the air in a suitable ratio to form a conform gas when entering the combustion chamber 8. For this purpose, the control unit 18 is provided with a map defining a mixing flow pattern for air and surplus gas. As the surplus gas flow itself may not be ignitable, a pilot flame based on burning pilot fuel which is the liquefied VOC stored in the VOC fuel tank 5 is used to maintain the combustion.

One priority parameter for controlling the dual fuel supply is the oxygen content in the gas mixture entering the combustion chamber 8. For controlling this parameter, the oxygen set point is set to a value larger than 12% to assure stable combustion, however it is important that the oxygen set point is not set too high as this will create an unnecessary load on the air compressor stage and displace the surplus gas. Feedback to this control is provided by an oxygen content sampler which is a part of the control unit 18 and which determines the oxygen content in the gas mixture entering the combustion chamber 8 based on sensed values. Variation of this parameter is conducted by actuation of the surplus gas valve 20.

The gas turbine is speed controlled to maintain a correct frequency/voltage against an electrical grid. Fuel demands are modulated between surplus gas and pilot fuel, in a priority to use surplus gas as the main fuel. Exhaust temperature is monitored and controlled by dilution air to keep temperature at a safe level.

In the following exemplary values for the parameters of an exemplary operation are given:

### Supply of surplus gas:

Norm flow rate = 7500Nm³/h
Pressure = 8-10 barg
Temperature = 60-90°C
composition = 10 vol% of carbon dioxide (CO₂), 10 vol% of water (H₂O), 65 vol% of nitrogen (N₂), 5 vol% of oxygen (O₂) and 10 vol% of hydrocarbons (HC)
Mass flow rate of hydrocarbon = 0.16 kg/s

### Supply of liquefied VOC:

Mass flow rate = 0.06 kg/s

### Air supply:

Norm flow rate = 12500Nm³/h
Composition = 21 vol% of oxygen, 78 vol% of nitrogen
Temperature = 20°C
Pressure = 0.1 barg

### Compressed air:

Temperature = 180°C
Pressure = 6.7 barg

### Combustion chamber:

Temperature = 1500°C

### Exhaust entering expander:

Pressure = 6.7 barg
Temperature = 1000°C

### Output of gas turbine:

Load = 2.0 MW

### Exhaust leaving gas turbine:

Temperature = 580°C
Pressure = 0.01 barg

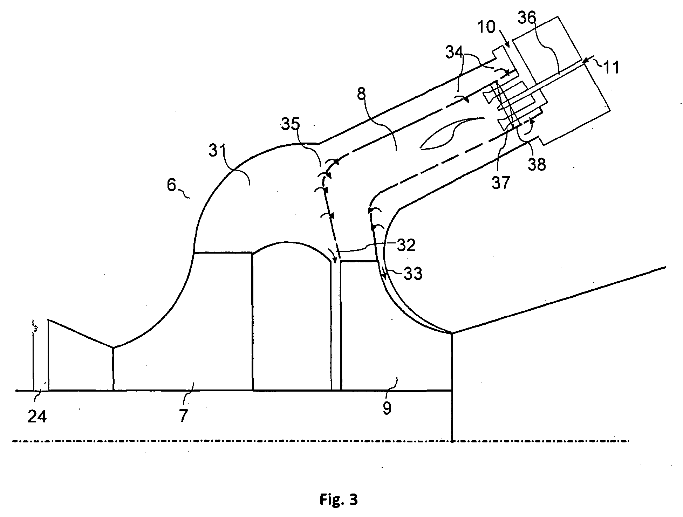

The gas turbine 6 is in the following described in more detail, Fig. 3 , especially is the supply of air described more clearly in this section. Part of the air which is compressed by the compressor 7 is bypassing the combustion chamber 8 completely and is directly fed to the expander 9. Another part may also bypass the combustion chamber 8 completely and being guided along the outside of the expander 9 for e.g. cooling purposes 32 & 33. Another part of air is supplied to an upstream end of the combustion chamber 8, 34. And, another part of air is supplied to a downstream end of the combustion chamber 8, 35. The pilot fuel is injected into the combustion chamber 8 via a centrally arranged pilot fuel nozzle 11, whereas the surplus gas 10 is injected into the combustion chamber 8 via surplus gas nozzles 37 arranged symmetrically around the pilot fuel nozzle 36. In order to mix the combustion substance, a swirl 38 is provided in the area of the nozzles. Inlet guide vanes 24 regulate the throughput of the gas turbine.

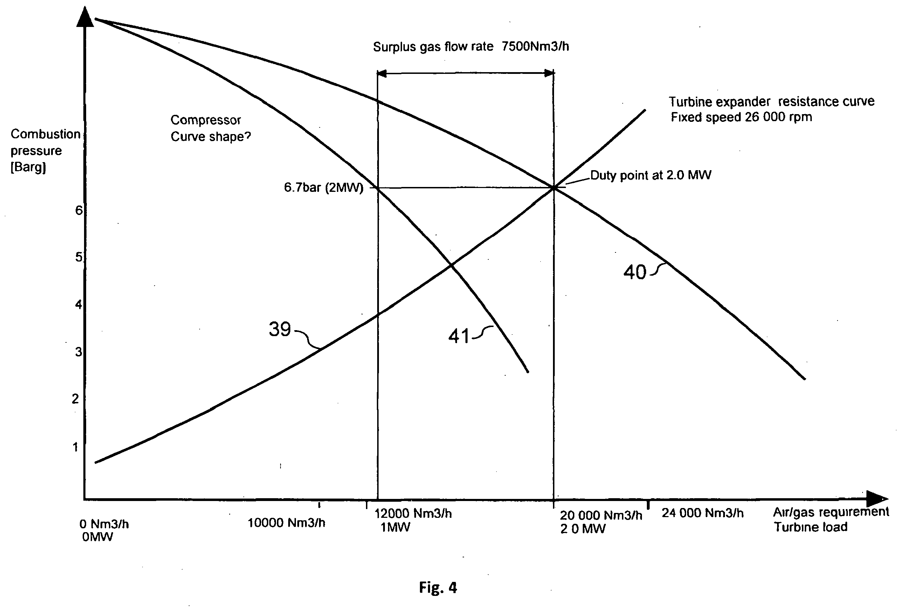

Fig. 4 is a diagram showing how the duty point of the gas turbine 6 can be determined. The vertical axis of the diagram indicates the combustion pressure in the combustion chamber 8. The horizontal axis indicates both, the air/gas requirement and the load of the gas turbine 6. The upper numbers at the horizontal axis of the diagram indicate the air/gas requirement, whereas the lower numbers at the horizontal axis of the diagram indicate the load of the gas turbine 6. A first curve shows the expander resistance curve at a fixed speed of 26000rpm. A second curve indicates the compressor curve when the inlet gate vanes 21 are opened fully. A third curve shows the compressor curve when the inlet gate vanes 21 are adjusted accordingly in order be correctly adapted to the surplus gas flow rate. The point where the first curve and the second curve intersect each other is the duty point of the gas turbine 6, which is in this case at 2.0 MW. The intersection point of the horizontal line through the duty point indicates the combustion pressure, which is 6.7 bar in this case. The horizontal distance between the duty point and the point where the third curve and the horizontal line through the duty point intersect, gives the maximum achievable surplus gas flow rate, which is 7500Nm³/h in this case.

While the invention has been illustrated and described in detail in the drawings and foregoing description, such illustration and description are to be considered illustrative or exemplary and not restrictive and it is not intended to limit the invention to the disclosed embodiments. The mere fact that certain measures are recited in mutually different dependent claims does not indicate that a combination of these measures cannot be used advantageously. Any reference signs in the claims should not be construed as limiting the scope of the invention.

## Claims

1. Method of treating cargo vapors from crude oil and petroleum products tanks (2) to generate electrical power by operating a gas turbine (6) having a compressor (7), a combustion chamber (8) and an expander (9); the method comprising the step of separating the cargo vapors into liquid volatile organic compounds (LVOC) and compressed surplus gas in a VOC recovery plant (1); the method being **characterized by** the steps of:
• controllably feeding the compressed surplus gas to the combustion chamber (8);
• feeding the liquid volatile organic compounds (LVOC) to the combustion chamber (8) as pilot fuel;
• feeding air to the compressor (7) operated by the expander (9) and feeding the compressed air to the combustion chamber (8);
• controlling the volume flow of air supplied to the compressor proportionally to the feeding of the surplus gas, and
• combusting the compressed air, surplus gas and the liquid volatile organic compounds (LVOC) in the combustion chamber (8); using the combustion for operating a generator (12) with the gas turbine (6) to generate electrical power.

2. Method according to claim 1, further comprising controlling the supplies to the combustion chamber (8) with a control unit (18).

3. Method according to one of the preceding claims, further comprising the step of storing the liquefied volatile organic compounds (LVOC) in an LVOC fuel tank (5) at a pressure of 6 to 8 barg.

4. Method according to one of the preceding claims, further comprising the step of controlling the supply of air, surplus gas and/or liquid volatile organic compounds (VOC) fed to the gas turbine (6) dependent on the wobbe index of the surplus gas.

5. Method according to one of the preceding claims, further comprising the step of bypassing part of the compressed air around the combustion chamber (8) to influence expander inlet temperature.

6. Method according to one of the preceding claims, wherein the surplus gas comprises 0 - 10vol % oxygen (O₂).

7. Method according to claim 6, wherein the surplus gas further comprises hydrocarbon (HC) mixed with nitrogen (N₂), carbon dioxide (CO₂), and sulphur dioxide + hydrogen sulfide (SO₂+H2S) in different compositions.

8. Method according to one of the preceding claims, further comprising the step of controlling the supply of compressed air and surplus gas fed to the gas turbine (6) dependent on the oxygen content in the gas mixture entering the combustion chamber (8).

9. System for treating cargo vapors from crude oil and petroleum products tanks (2) to generate electrical power, comprising:
- a VOC recovery plant (1) for separating the cargo vapors into liquid volatile organic compounds (LVOC) and surplus gas in a VOC recovery plant (1);
a gas turbine (6) for driving a generator (12) being mechanically connected to a shaft(13), and having a compressor (7), a combustion chamber (8) and an expander (9); the system further comprising
a surplus gas line (10) for feeding the surplus gas to the combustion chamber (8);
and
an air supply line for feeding air to the compressor (7) and from there to the combustion chamber (8). the system being **characterized by**: a supply line (4, 5, 11) configured for feeding the liquid volatile organic compounds (LVOC) to the combustion chamber (8) as pilot fuel and inlet guide vanes (21) for controlling a volume air flow into the compressor

10. System according to claim 9, wherein the air supply line further comprises inlet guide vanes (21) upstream of the compressor (7) for regulating a volume flow of air.

11. System according to claim 9 or 10, further comprising a wobbe index sensor (22) for measuring the wobbe index in the surplus gas line (10).

12. System according to one of claims 9 to 11, further comprising an oxygen content sampler for determining the content of oxygen in the gas mixture entering the combustion chamber (8).

13. System according to one of claims 9 to 12, further comprising a control unit (18) for controlling supply of the gas turbine (6).

## Patentansprüche

1. Verfahren zur Verarbeitung von Ladungsdämpfen aus Rohöl- und Erdölprodukttanks (2) zur Erzeugung von elektrischer Energie durch Betreiben einer Gasturbine (6) mit einem Kompressor (7), einer Brennkammer (8) und einem Expander (9); welches Verfahren den Schritt eines Abtrennens der Ladungsdämpfe in flüssige flüchtige organische Verbindungen (LVOC) und komprimiertes überschüssiges Gas in einer VOC-Rückgewinnungsanlage (1) umfasst; wobei das Verfahren durch die folgenden Schritte gekennzeichnet ist:
• Zuführen des komprimierten überschüssigen Gases in die Brennkammer (8) in einer kontrollierten Weise;
• Zuführen der flüssigen flüchtigen organischen Verbindungen (LVOC) in die Brennkammer (8) als Pilotkraftstoff;
• Zuführen von Luft in den von dem Expander (9) betriebenen Kompressor (7) und Zuführen der komprimierten Luft in die Brennkammer (8);
• Steuerung des in den Kompressor zugeführten Luftvolumenstroms proportional zum Zuführen des überschüssigen Gases, und
• Verbrennung der komprimierten Luft, des überschüssigen Gases und der flüssigen flüchtigen organischen Verbindungen (LVOC) in der Brennkammer (8); unter Verwendung der Verbrennung zum Betreiben eines Generators (12) mit der Gasturbine (6) zur Erzeugung von elektrischer Energie.

2. Verfahren nach Anspruch 1, ferner umfassend die Steuerung der Zufuhren in die Brennkammer (8) durch eine Steuereinheit (18).

3. Verfahren nach einem der vorhergehenden Ansprüche, ferner umfassend den Schritt einer Lagerung der verflüssigten flüchtigen organischen Verbindungen (LVOC) in einer LVOC-Brennstofftank (5) bei einem Druck von 6 bis 8 bar.

4. Verfahren nach einem der vorhergehenden Ansprüche, ferner umfassend den Schritt einer Steuerung der Luftzufuhr, des überschüssigen Gases und/oder der flüssigen flüchtigen organischen Verbindungen (VOC), die in die Gasturbine (6) zugeführt werden, abhängig von dem Wobbeindex des überschüssigen Gases.

5. Verfahren nach einem der vorhergehenden Ansprüche, ferner umfassend den Schritt des Umleitens eines Teils der komprimierten Luft um die Brennkammer (8) herum, um die Temperatur des Einlasses des Expanders zu beeinflussen.

6. Verfahren nach einem der vorhergehenden Ansprüche, wobei das überschüssige Gas 0-10 Vol.-% Sauerstoff (O₂) enthält.

7. Verfahren nach Anspruch 6, wobei das überschüssige Gas ferner mit Stickstoff (N₂) vermischten Kohlenwasserstoff (HC), Kohlendioxid (CO₂) und Schwefeldioxid + Schwefelwasserstoff (SO₂+H2S) in verschiedenen Zusammensetzungen umfasst.

8. Verfahren nach einem der vorhergehenden Ansprüche, ferner umfassend den Schritt der Steuerung der Zufuhr von in die Gasturbine (6) gespeister komprimierter Luft und überschüssigem Gas abhängig von dem Sauerstoffgehalt der Gasmischung, die in die Brennkammer (8) gelangt.

9. System zur Verarbeitung von Ladungsdämpfen aus Rohöl- und Erdölprodukttanks (2) zur Erzeugung von elektrischer Energie, umfassend:
- eine VOC-Rückgewinnungsanlage (1) zum Abtrennen der Ladungsdämpfe in flüssige flüchtige organische Verbindungen (LVOC) und überschüssiges Gas in einer VOC-Rückgewinnungsanlage (1);
- eine Gasturbine (6) zum Antreiben eines mit einer Welle (13) mechanisch verbundenen Generators (12), mit einem Kompressor (7), einer Brennkammer (8) und einem Expander (9); wobei das System ferner
eine Leitung (10) für überschüssiges Gas zum Zuführen des überschüssigen Gases in die Brennkammer (8); und [NWE1]
eine Luftzufuhrleitung für die Zufuhr von Luft in den Kompressor (7) und von diesem in die Brennkammer (8) umfasst,
wobei das System **gekennzeichnet ist durch**:
eine Zufuhrleitung (4, 5, 11), die dazu ausgebildet ist, die flüssigen flüchtigen organischen Verbindungen (LVOC) in die Brennkammer (8) als Pilotkraftstoff einzuführen, und
Dralldrosseln (21) für die Steuerung eines Luftvolumenstroms in den Kompressor.[NWE2]

10. System nach nach Anspruch 9, wobei die Luftzufuhrleitung ferner dem Kompressor (7) vorgeschaltete Dralldrosseln (21) zur Regelung eines Luftvolumenstroms umfasst.

11. System nach Anspruch 9 oder 10, ferner umfassend einen Wobbeindexsensor (22) für das Messen des Wobbeindexes in der Leitung (10) für überschüssiges Gas umfasst.

12. System nach einem der Ansprüche 9 bis 11, ferner umfassend einen Sauerstoffgehalt-Probensammler für die Bestimmung des Sauerstoffgehalts der Gasmischung, die in die Brennkammer (8) gelangt.

13. System nach einem der Ansprüche 9 bis 12, ferner umfassend eine Steuereinheit (18) für die Steuerung der Zufuhr in die Gasturbine (6).

## Revendications

1. Procédé de traitement de vapeurs de cargaison provenant de citernes (2) contenant des produits de pétrole brut et des produits pétroliers pour générer de la puissance électrique en faisant fonctionner une turbine à gaz (6) ayant un compresseur (7), une chambre de combustion (8) et un dispositif d'expansion (9); le procédé comprenant l'étape consistant à séparer les vapeurs de cargaison en composés organiques volatils liquides (LVOC) et le surplus de gaz comprimé dans une installation de récupération de VOC (1); le procédé étant **caractérisé par** les étapes consistant à:
• introduire de manière contrôlée le surplus de gaz comprimé dans la chambre de combustion (8);
• introduire les composés organiques volatils liquides (LVOC) dans la chambre de combustion (8) en tant que combustible pilote;
• introduire de l'air dans le compresseur (7) actionné par le dispositif d'expansion (9) et introduire l'air comprimé dans la chambre de combustion (8);
• commander le flux volumique d'air fourni au compresseur proportionnellement à l'introduction du surplus de gaz, et
• brûler l'air comprimé, le surplus de gaz et les composés organiques volatils liquides (LVOC) dans la chambre de combustion (8); en utilisant la combustion pour faire fonctionner un générateur (12) avec la turbine à gaz (6) pour générer de la puissance électrique.

2. Procédé selon la revendication 1, comprenant en outre la commande de l'alimentation de la chambre de combustion (8) à l'aide d'une unité de commande (18).

3. Procédé selon l'une des revendications précédentes, comprenant en outre l'étape consistant à stocker les composés organiques volatils liquides (LVOC) dans une citerne de combustible LVOC (5) sous une pression compris entre 6 à 8 barg.

4. Procédé selon l'une des revendications précédentes, comprenant en outre l'étape consistant à commander l'alimentation d'air, le surplus de gaz et/ou les composés organiques volatils liquides (VOC) introduits dans la turbine à gaz (6) en fonction de l'indice de Wobbe du surplus de gaz.

5. Procédé selon l'une des revendications précédentes, comprenant en outre l'étape consistant à faire dériver une partie de l'air comprimé autour de la chambre de combustion (8) pour influencer la température d'entrée du dispositif d'expansion.

6. Procédé selon l'une des revendications précédentes, dans lequel le surplus de gaz comprend 0 - 10 % en volume d'oxygène (O₂).

7. Procédé selon la revendication 6, dans lequel le surplus de gaz comprend en outre de l'hydrocarbure (HC) mélangé avec de l'azote (N₂), du dioxyde de carbone (CO₂), et du dioxyde de soufre + sulfide d'hydrogène (SO₂+H2S) dans des compositions différentes.

8. Procédé selon l'une des revendications précédentes, comprenant en outre l'étape consistant à commander l'alimentation d'air comprimé et de surplus de gaz introduit dans la turbine à gaz (6) en fonction de la teneur en oxygène dans le mélange de gaz entrant dans la chambre de combustion (8).

9. Système de traitement de vapeurs de cargaison provenant de citernes (2) de produits de pétrole brut et de produits pétroliers pour générer de la puissance électrique, comprenant:
- une installation de récupération de VOC (1) pour séparer les vapeurs de cargaison en composés organiques volatils liquides (LVOC) et surplus de gaz dans une installation de récupération de VOC (1);
une turbine à gaz (6) pour entraîner un générateur (12) étant relié mécaniquement à un arbre (13) et comportant un compresseur (7), une chambre de combustion (8) et un dispositif d'expansion (9); le système comprenant un outre
un conduit de surplus de gaz (10) pour introduire le surplus de gaz dans la chambre de combustion (8); et
un conduit d'alimentation d'air pour introduire de l'air dans le compresseur (7) et à partir de celui-ci dans la chambre de combustion (8), le système étant **caractérisé par**:
un conduit d'alimentation (4, 5, 11) configuré pour introduire les composés organiques volatils liquides (LVOC) dans la chambre de combustion (8) en tant que combustible pilote, et
des aubes de guidage d'entrée (21) pour commander un flux volumique d'air vers le compresseur.

10. Système selon la revendication 9, dans lequel le conduit d'alimentation d'air comprend en outre des aubes de guidage d'entrée (21) en amont du compresseur (7) pour régler un flux volumique d'air.

11. Système selon la revendication 9 ou 10, comprenant en outre un capteur d'indice Wobbe (22) pour mesurer l'indice Wobbe dans le conduit de surplus de gaz (10).

12. Système selon l'une des revendications 9 à 11, comprenant en outre un échantillonneur de teneur en oxygène pour déterminer la teneur en oxygène dans le mélange de gaz entrant dans la chambre de combustion (8).

13. Système selon l'une des revendications 9 à 12, comprenant en outre une unité de commande (18) destinée à commander l'alimentation de la turbine à gaz (6).
